Europäisches Patentamt

European Patent Office

Office européen des brevets

(11) Publication number: **0 585 961 A1**

# EUROPEAN PATENT APPLICATION

(21) Application number: **93115834.9**

(51) Int. Cl.⁵: **H04N 1/04**

(22) Date of filing: **17.05.89**

This application was filed on 30 - 09 - 1993 as a divisional application to the application mentioned under INID code 60.

(30) Priority: **18.05.88 JP 121392/88**

(43) Date of publication of application:
**09.03.94 Bulletin 94/10**

(60) Publication number of the earlier application in accordance with Art.76 EPC: **0 342 640**

(84) Designated Contracting States:
**DE FR GB**

(71) Applicant: **FUJI PHOTO FILM CO., LTD.**
**210 Nakanuma**

**Minami-Ashigara-shi**
**Kanagawa(JP)**

(72) Inventor: **Urabe, Hitoshi**
**798 Miyanodai**
**Keisei-Machi**
**Ashigara-Kamigun Kanagawa(JP)**
Inventor: **Morikawa, Seiichiro**
**798 Miyanodai**
**Keisei-Machi**
**Ashigara-Kamigun Kanagawa(JP)**

(74) Representative: **Patentanwälte Grünecker,**
**Kinkeldey, Stockmair & Partner**
**Maximilianstrasse 58**
**D-80538 München (DE)**

(54) A light beam scanning apparatus for forming a halftone screen.

(57) The invention refers to a light beam scanning apparatus for forming a halftone screen to prepare a multi-color separated halftone gradation image which is printable and reproducible by superposing an image signal obtained by scanning an original comprising continuous-tone color images with a halftone screen signal generated electrically, which comprises a first laser diode for emitting a synchronizing laser beam, a second laser diode for emitting a recording laser beam, a galvanometer for inputting the synchronizing laser beam and the recording laser beam through a collimator and a mirror, a synchronizing signal generator and an image recording section for inputting laser beams reflected and deflected by said galvanometer, a PLL multiplier for outputting a synchronizing signal by inputting an electric signal from said synchronizing signal generator, and an output controlling section for driving the second laser diode in accordance with the image signal and the synchronizing signal.

FIG. 4

This invention relates to a light beam scanning apparatus for forming a halftone screen.

In the fields of printing and plate-making, an image scanning/reading/recording system has been widely used in recent years, since same can electrically process image information of an original and prepare an original film plate for printing to thereby rationalize the work process and improve the image quality.

Such an image scanning/reading/recording system comprises basically an input section, a control section and an output section. More particularly, the input section of the system picks up image signals by a lighting system, a color separation system and a photometry mechanism, and converts same into the image information photoelectrically. The control section arithmetically processes the image information for gradation correction, color correction, contour emphasis, conversion from R (red), G (green), B (blue) to C, M, Y, K and the like, in accordance with plate-making conditions. Then, the processed image information is converted again at the output section into optical signals, such as laser beams, to record images on a recording carrier comprising a photosensitive material. Next, the recording carrier is subsequently developed by a predetermined developing device and used as the orignial film plate for printing and so on.

When the original is of continuous tone images, such as a picture or a photograph, it is necessary to separate the original into dots to express the degree of density. The continuous tone image is converted into a halftone image which is a group of dots formed in different dimensions in accordance with the degree of density of the image. A method has been proposed for separating an original into dots by placing a contact screen comprising dots in different gradation in a net form on a film and exposing the recording carrier with optical signals corresponding to the original continuous tone images. In the image scanning/reading/recording system, a halftone screen which is a counterpart of such a contact screen may be formed electrically.

Figure 1 shows a prior art known from Japanese Patent Publication (KOKOKU) No. 49361/1977, wherein the reference numeral 100 denotes a basic periodic section of an electrically formed halftone screen. The halftone screen is formed by repetition of the same pattern and the minimum unit of the pattern is the basic periodic section 100, which comprises eight scanning lines $S_1$ through $S_8$ which are arranged in the direction of Y in parallel to each other. Each part of the section 100 is defined with voltage signals unique to the scanning lines $S_1$ through $S_8$ which respectively change along the recording direction X. The respective voltages of the scanning lines $S_1$, $S_2$, $S_4$, and $S_5$ are set at high voltages when they are passing a point A to a point D in a dot 101, while the voltage of the scanning line $S_3$ at the point E is set low. The voltages of the scanning lines $S_1$ through $S_5$ are set to gradually decrease from the points A through D toward the point E. The voltage signals of the scanning lines $S_1$ through $S_8$ can form halftone screen signals of the respective scanning lines by superposing a plurality of alternating voltage signals of different periods and of a triangle shape, and by gradually shifting the phase thereof for each scanning line.

When multi-colored images are converted into dots for reproduction, it is necessary to generate a plurality of halftone screens and to superpose thus formed halftone gradation images. Each halftone screen is rotated by a predetermined angle $\theta$ from the recording direction X in order to prevent generation of Moire pattern when the halftone images are superposed.

The basic periodic section 100 is generated periodically at a frequency sufficient for covering all the scanning zones of the original to form the halftone screen. The halftone screen signals which form the halftone screen are superposed with the image signals which are read out from the original optically at the input section of the image scanning/reading recording system to form the halftone images on the original film plate.

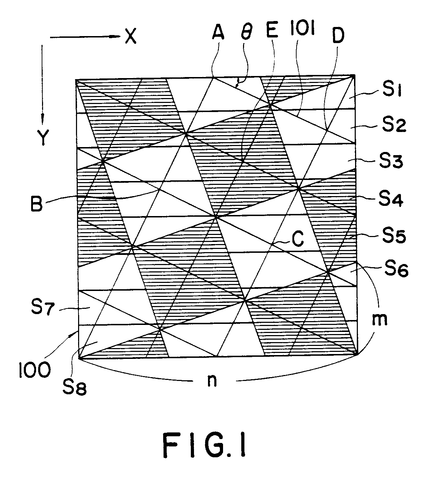

A halftone plate for color printing an area modulation type can be identified with the number of screen lins (eg. line number/inch, LPI), screen angle (m/n), and dot patterns. The screen angle is a rational number defined by m/n, as shown in Figure 1, and is necessary for each of the four colors, C, M, Y, and K. The screen angle and the dot patterns may be formed by the technique disclosed in Japanese Patent Publication No. 49361/1977. The screen line number may be obtained arbitrarily for the color scanner of a drum type by simply changing the magnification with an optical zoom. However, it is not easy to use an optical zoom for the color scanner of a flat bed (plane) type. Due to its high speed processing, the color scanner of a flat bed type is required to conduct main scanning of light spots optically, and an addition of a zooming mechanism to the system is almost impossible. The control system is further complicated and enlarged, if the size of a light spot or pitch is changed.

## SUMMARY OF THE INVENTION

It is the object of the present invention to eliminate the problems encountered in the prior art and to provide an improved light beam scanning apparatus for forming a halftone screen.

This object is solved by a light beam scanning apparatus having the features of claim 1.

The nature, principle, and utility of the invention will become more apparent in the following detailed description, when read in conjunction with the accompanying drawings.

## BRIEF DESCRIPTION OF THE DRAWINGS

In the accompanying drawings:

Fig. 1 is a view to show a basic periodic section of a halftone screen;

Fig. 2 is a structural view of a light beam scanning system according to the invention;

Fig. 3 is a chart to show an example of halftone data having a line number 170 LP1; and

Fig. 4 is a view to show the formation of the halftone data.

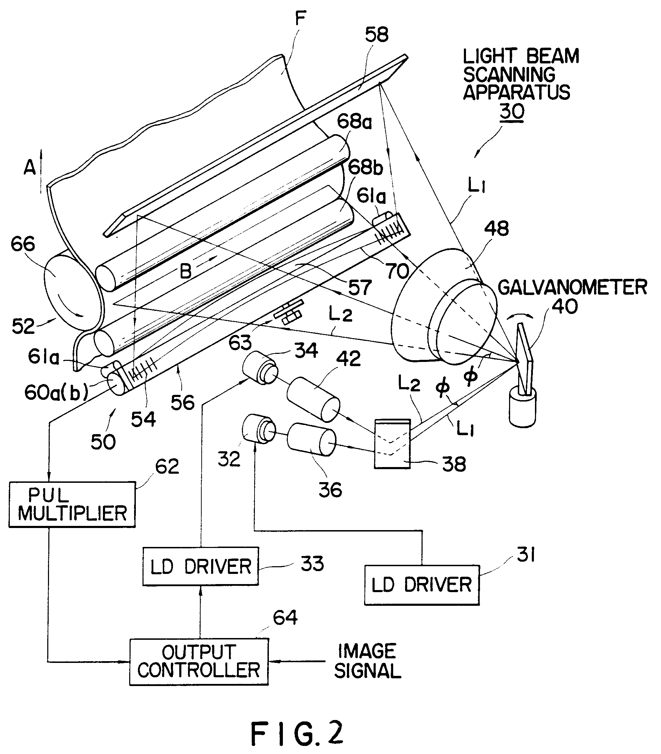

In Fig. 2, a light beam scanning apparatus 30 includes a laser diode 32 which emits a synchronizing laser beam $L_1$, when driven by an LD driver 31 and a laser diode 34 which emits a recording laser beam $L_2$ when driven by an LD driver 33. The light beam $L_1$ for synchronization outputted from the laser diode 32 is guided through a collimator 36 and a mirror 38 eventually to reach a galvanometer 40. The light beam $L_2$ for recording outputted from the laser diode 34 is directed through a collimator 42 and a mirror 38 toward the galvanometer 40 which is deviated from the laser beam $L_1$ by the angle $\theta$. The galvanometer 40 operatively reflects and deflects the laser beams $L_1$ and $L_2$ by oscillating the mirror at a high speed. Thus, reflected and deflected laser beams $L_1$ and $L_2$ are respectively guided to a synchronizing signal generator 50 and an image recording section 52 via the scanning lens 48 comprising an $f\theta$ lens. The synchronizing laser beam $L_1$ enters the scanning lens 48 at an incident angle of $\phi$ from the optical axis and is directed to the synchronizing signal generator 50 via the periphery of the scanning lens 48. The recording laser beam $L_2$ enters the scanning lens 48 within the plane including the optical axis and is directed to the image recording section 52 via the center of the scanning lens 48.

The synchronizing signal generator 50 includes grids 56 with a large number of slits 54 which are arranged at an even interval along the scanning direction of the synchronizing laser beam $L_1$, and the synchronizing laser beam $L_1$ is guided through the mirror 58 toward the grids 56. A condensing rod 57 is provided behind the grids 56 so that the synchronizing laser beam $L_1$ is passed through the condensing rod 57, guided to photodetectors 60a and 60b at both ends thereof, and converted into electric signals. The electric signals obtained from the photodetectors 60a and 60b are multiplied by a PLL (phase locked loop) multiplier 62 and supplied to an output controller 64 as a synchronizing signal. The output controller 64 controls the LD driver 33 based on the image signal and the synchronizing signal. As shown in Table 1, if the number of screen lines and the screen angle are determined, it is then possible to design a dot pattern.

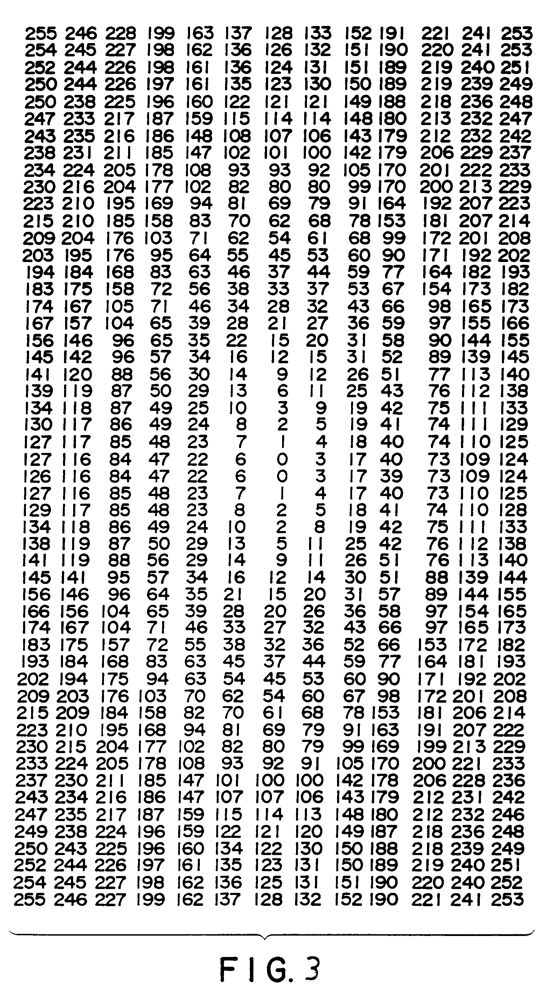

Figure 3 shows an embodiment of such a dot pattern consisting of 175 lines and an angle 0°. For each of the combinations of the screen line number with the screen angle shown in Table 1, a halftone pattern (template data) is designed to be used for the formation of a halftone screen.

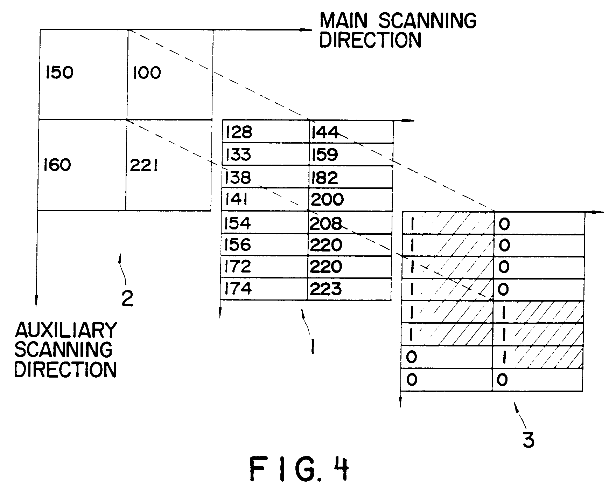

The template data are usually stored in a floppy disk or an ROM of an image output section, and at the time of selecting the screen line number and the screen angle. The scanning pitch $\underline{p}$ is selected from the Table 1 of the image output section. Then, circuits are set to be controlled with the selected pitch $\underline{p}$. The template data which is stored therein are read out in an RAM zone. As shown in Figure 4, by using the read-out template data 1 and the image signals 2, halftone data 3 are formed. In Figure 4, the template data 1 is compared with the image data 2. When the image data 2 is larger than the other, it outputs "1". When the image data 2 is smaller, it output "0". Thus, the halftone data 3 are obtained. Corresponding to the halftone data 3, light is modulated to expose the photosensitive material and to obtain halftone plates.

| nominal line number LPl | pitch p (μm) | 0° | | 45° | | m/n | 15° / 75° | | |
|---|---|---|---|---|---|---|---|---|---|
| | | $a_0$ | $\ell_0$ | $a_{45}$ | $\ell_{45}$ | | angle | $a_{15}$ | $\ell_{15}$ |
| 65 | 22.5 | 17 | 66.4 | 25 | 63.9 | 1/3 | 18.4° / 71.6° | 50 | 71.4 |
| 85 | 22.5 | 13 | 86.8 | 20 | 79.8 | 1/3 | 18.4° / 71.6° | 40 | 89.2 |
| 100 | 12.5 | 20 | 101.6 | 30 | 95.8 | 1/3 | 18.4° / 71.6° | 60 | 107.1 |
| 120 | 12.5 | 17 | 119.5 | 25 | 114.9 | 1/3 | 18.4° / 71.6° | 50 | 128.5 |
| 133 | 11.25 | 17 | 132.8 | 25 | 127.7 | 1/3 | 18.4° / 71.6° | 50 | 142.8 |
| 150 | 12.5 | 14 | 145.1 | 20 | 143.7 | 1/3 | 18.4° / 71.6° | 40 | 160.6 |
| 175 | 11.25 | 13 | 173.7 | 20 | 159.6 | 1/3 | 18.4° / 71.6° | 40 | 178.5 |
| 200 | 12.5 | 10 | 203.2 | 15 | 191.6 | 1/3 | 18.4° / 71.6° | 30 | 214.2 |

Table 1

## Claims

1. A light beam scanning apparatus for forming a halftone screen to prepare a multi-color separated halftone gradation image which is printable and reproducible by superposing an image signal obtained

4

by scanning an original comprising continuous-tone color images with a halftone screen signal generated electrically, which comprises a first laser diode (32) for emitting a synchronizing laser beam (21), a second laser diode (34) for emitting a recording laser beam (22), a galvanometer (40) for inputting the synchronizing laser beam (21) and the recording laser beam (62) through a collimator (36,42) and a mirror (38), a synchronizing signal generator (50) and an image recording section (52) for inputting laser beams reflected and deflected by said galvanometer (40), a PLL multiplier (62) for outputting a synchronizing signal by inputting an electric signal from said synchronizing signal generator (50), and an output controlling section (64) for driving the second laser diode (34) in accordance with the image signal and the synchronizing signal.

2. A light beam scanning apparatus as claimed in claim 1, wherein the synchronizing laser beam (21) and the recording laser beam (22) are deviated by a predetermined angle and are inputted to said galvanometer (40).

3. A light beam scanning apparatus as claimed in claim 1, wherein an $f\theta$ lens (48) is provided between said galvanometer (40) and said synchronizing signal generator (50).

4. A light beam scanning apparatus as claimed in claim 1, wherein said synchronizing signal generator (50) comprises grids (52) with a large number of slits (54) which are arranged at an even interval along the scanning direction of the synchronizing laser beam (21), a condensing rod (57) which is provided behind said grids (52), and photodetectors (60a,60b) which are provided at both ends of said condensing rod (57).

FIG.1

**F I G. 2**

```
255 246 228 199 163 137 128 133 152 191 221 241 253
254 245 227 198 162 136 126 132 151 190 220 241 253
252 244 226 198 161 136 124 131 151 189 219 240 251
250 244 226 197 161 135 123 130 150 189 219 239 249
250 238 225 196 160 122 121 121 149 188 218 236 248
247 233 217 187 159 115 114 114 148 180 213 232 247
243 235 216 186 148 108 107 106 143 179 212 232 242
238 231 211 185 147 102 101 100 142 179 206 229 237
234 224 205 178 108  93  93  92 105 170 201 222 233
230 216 204 177 102  82  80  80  99 170 200 213 229
223 210 195 169  94  81  69  79  91 164 192 207 223
215 210 185 158  83  70  62  68  78 153 181 207 214
209 204 176 103  71  62  54  61  68  99 172 201 208
203 195 176  95  64  55  45  53  60  90 171 192 202
194 184 168  83  63  46  37  44  59  77 164 182 193
183 175 158  72  56  38  33  37  53  67 154 173 182
174 167 105  71  46  34  28  32  43  66  98 165 173
167 157 104  65  39  28  21  27  36  59  97 155 166
156 146  96  65  35  22  15  20  31  58  90 144 155
145 142  96  57  34  16  12  15  31  52  89 139 145
141 120  88  56  30  14   9  12  26  51  77 113 140
139 119  87  50  29  13   6  11  25  43  76 112 138
134 118  87  49  25  10   3   9  19  42  75 111 133
130 117  86  49  24   8   2   5  19  41  74 111 129
127 117  85  48  23   7   1   4  18  40  74 110 125
127 116  84  47  22   6   0   3  17  40  73 109 124
126 116  84  47  22   6   0   3  17  39  73 109 124
127 116  85  48  23   7   1   4  17  40  73 110 125
129 117  85  48  23   8   2   5  18  41  74 110 128
134 118  86  49  24  10   2   8  19  42  75 111 133
138 119  87  50  29  13   5  11  25  42  76 112 138
141 119  88  56  29  14   9  11  26  51  76 113 140
145 141  95  57  34  16  12  14  30  51  88 139 144
156 146  96  64  35  21  15  20  31  57  89 144 155
166 156 104  65  39  28  20  26  36  58  97 154 165
174 167 104  71  46  33  27  32  43  66  97 165 173
183 175 157  72  55  38  32  36  52  66 153 172 182
193 184 168  83  63  45  37  44  59  77 164 181 193
202 194 175  94  63  54  45  53  60  90 171 192 202
209 203 176 103  70  62  54  60  67  98 172 201 208
215 209 184 158  82  70  61  68  78 153 181 206 214
223 210 195 168  94  81  69  79  91 163 191 207 222
230 215 204 177 102  82  80  79  99 169 199 213 229
233 224 205 178 108  93  92  91 105 170 200 221 233
237 230 211 185 147 101 100 100 142 178 206 228 236
243 234 216 186 147 107 107 106 143 179 212 231 242
247 235 217 187 159 115 114 113 148 180 212 232 246
249 238 224 196 159 122 121 120 149 187 218 236 248
250 243 225 196 160 134 122 130 150 188 218 239 249
252 244 226 197 161 135 123 131 150 189 219 240 251
254 245 227 198 162 136 125 131 151 190 220 240 252
255 246 227 199 162 137 128 132 152 190 221 241 253
```

# F I G. 3

MAIN SCANNING
DIRECTION

| 150 | 100 |
|-----|-----|
| 160 | 221 |

2

| 128 | 144 |
|-----|-----|
| 133 | 159 |
| 138 | 182 |
| 141 | 200 |
| 154 | 208 |
| 156 | 220 |
| 172 | 220 |
| 174 | 223 |

AUXILIARY
SCANNING
DIRECTION

1

| I | O |
|---|---|
| I | O |
| I | O |
| I | O |
| I | I |
| I | I |
| O | I |
| O | O |

3

# F I G. 4

European Patent Office

**EUROPEAN SEARCH REPORT**

Application Number

EP 93 11 5834

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 050 010 (FUJI PHOTO FILM)<br>* abstract; figure 1 *<br>* page 2, line 17 - line 22 *<br>* page 3, line 23 - page 5, line 28 *<br>--- | 1 | H04N1/04 |
| A | WO-A-8 505 750 (EASTMAN KODAK COMPANY)<br>* abstract; figure 1 *<br>* page 3, line 9 - page 4, line 18 *<br>--- | 1,2 | |
| A | US-A-3 742 129 (ROBERTS ET AL)<br>* abstract; figure 9 *<br>--- | 1 | |
| A | GB-A-2 151 876 (DAINIPPON SCREEN MFG CO)<br>* abstract; figure 6 *<br><br>----- | 1 | |
| | | | **TECHNICAL FIELDS SEARCHED (Int. Cl.4)**<br><br>H04N<br>G02B |

The present search report has been drawn up for all claims

| Place of search | Date of completion of the search | Examiner |
|---|---|---|
| BERLIN | 28 OCTOBER 1993 | JONSSON B. |